# FASCICULE DE BREVET EUROPEEN

(11) **EP 3 247 229 B1**
(45) Date de publication et mention de la délivrance du brevet: **13.02.2019**
(21) Numéro de dépôt: 15813864.4
(22) Date de dépôt: 21.12.2015
(51) Int. Cl.: A23L 35/00, A23L 3/10

(54) **PLAT CUISINE ET SON PROCEDE DE PREPARATION ET DE CONDITIONNEMENT**
FERTIGGERICHT UND DESSEN ZUBEREITUNG- UND VERPACKUNGSVERFAHREN
PREPARED DISH AND ITS PREPARATION AND PACKAGING PROCESS

(30) Priorité: 22.01.2015 FR 1550510
(43) Date de publication de la demande: 29.11.2017
(73) Titulaire: Compagnie Generale De Conserve, 56004 Vannes Cedex (FR)
(72) Inventeur: ORIERE, Stéphane, 29310 Locunole (FR)
(74) Mandataire: Vidon Brevets & Stratégie
(86) Numéro de dépôt international: PCT/EP2015/080868
(87) Numéro de publication internationale: WO 2016/116239

(56) Documents cités:
- EP-A1- 0 930 021
- EP-A1- 1 897 820
- JP-A- H08 256 739
- US-A- 5 314 705
- US-A1- 2013 142 914

## Description

### 1. Domaine de l'invention

Le domaine de l'invention est celui de l'agroalimentaire.

L'invention concerne plus particulièrement un procédé de préparation et de conditionnement d'un plat cuisiné destiné à être consommé chaud de préférence.

L'invention concerne également un plat cuisiné obtenu par un tel procédé.

### 2. Art antérieur

Parmi les plats cuisinés (ou plats préparés) connus, on distingue plusieurs types de conditionnement et de conservation. La préparation industrielle de tels plats est décrite dans US 5 314 705 et EP 1 897 820, par exemple.

Les plats cuisinés de type conserves conditionnées en boîtes métalliques, contiennent des produits alimentaires cuisinés qui ont subi un traitement thermique à haute température, notamment à une température supérieure à 110°C (stérilisation). Ces plats cuisinés peuvent se conserver plusieurs mois à température ambiante.

Un inconvénient de ce type de conditionnement est que le traitement thermique, altère fortement la texture, le goût et/ou la couleur des produits du fait d'une trop forte cuisson de ces derniers.

Lors du traitement thermique, il est courant de mettre en rotation ou d'agiter le conditionnement, de façon à optimiser le traitement thermique.

De ce fait, les ingrédients sont mélangés au sein du conditionnement, et le contenu peut se trouver fortement dégradé mécaniquement. Le consommateur peut être surpris, voire déçu, de l'aspect du produit alimentaire contenu dans le plat cuisiné, lors de sa consommation.

Une difficulté avec les conserves réside dans le fait qu'il est difficile de stériliser des féculents comme des pâtes, du riz ou des légumes secs, avec une sauce en préservant la texture des féculents. En effet, il a été constaté que lorsque l'on stérilise des féculents dans une sauce, ils prennent en masse, à plus forte raison s'il y a agitation du récipient. La même difficulté a été constatée pour des légumes fragiles (tels que des tomates ou des aubergines, par exemple) ou bien du poisson.

Pour contourner cette difficulté, il a été proposé des plats préparés conditionnés dans des barquettes compartimentées (intégrant par exemple deux compartiments séparés par une cloison fixe).

Un des compartiments est destiné par exemple à recevoir une viande ou un poisson, et l'autre des féculents ou des légumes, qui peuvent être mélangés par le consommateur avant dégustation. Les plats cuisinés conditionnés en barquettes ont subi un traitement thermique relativement élevé, quoique plus faible que les conserves.

Les inconvénients de ce type de conditionnement sont sensiblement les mêmes que ceux des conserves, dus à l'altération des produits alimentaires provoquée par le traitement thermique.

Il existe par conséquent un besoin de l'amélioration de l'offre de plats cuisinés.

### 3. Objectifs de l'invention

L'invention a pour objectif de pallier ces inconvénients de l'art antérieur.

Plus précisément, un objectif de l'invention est de proposer un nouveau plat cuisiné qui présente un excellent aspect visuel et des caractéristiques gustatives préservées.

Un autre objectif de l'invention est de proposer un nouveau plat cuisiné qui peut être obtenu dans des conditions particulièrement économiques, et qui soit particulièrement adapté à une production industrielle.

### 4. Exposé de l'invention

Ces objectifs, ainsi que d'autres qui apparaîtront par la suite, sont atteints à l'aide d'un procédé de préparation et de conditionnement d'un plat cuisiné.

Selon l'invention, le procédé comprend les étapes suivantes :
- mise en place d'un premier produit alimentaire dans un récipient ;
- mise en place d'un second produit alimentaire dans ledit récipient de sorte que le second produit alimentaire soit situé au-dessus dudit premier produit alimentaire ;
- mise en place d'une sauce ou d'un jus dans ledit récipient, de sorte que ladite sauce ou ledit jus soit positionnée/situé(e) au-dessous dudit premier produit alimentaire ou mêlé audit premier produit alimentaire, sans être en contact avec ledit second produit alimentaire, avant et pendant le chauffage ;
- fermeture hermétique sous vide dudit récipient ;
- chauffage du contenu alimentaire dudit récipient fermé, ledit récipient demeurant statique lors de ladite étape de chauffage.

Ainsi, l'invention est relative au domaine des plats cuisinés qui sont pasteurisés ou stérilisés, la pasteurisation ou stérilisation étant réalisée sur la préparation alimentaire positionnée dans un récipient qui est hermétiquement fermé.

Le plat cuisiné est, par exemple, destiné à un réchauffement ou une cuisson aux micro-ondes par le consommateur.

L'approche de l'invention repose sur un ordre particulier de disposition des aliments dans le récipient avant et pendant le chauffage (stérilisation), une fermeture sous vide du récipient rempli et un traitement thermique en statique du récipient fermé.

Plus précisément, on remplit le récipient par couches ou strates successives, de sorte qu'avant (et pendant) le chauffage, une sauce ou un jus est disposé dans la partie basse du récipient, cette sauce ou ce jus étant séparé du produit alimentaire se trouvant sur le dessus, un féculent par exemple, par un autre produit alimentaire, une viande par exemple.

Cette technique permet ainsi au féculent se trouvant sur le dessus de ne pas être en contact avec la sauce ou le jus se trouvant dans le fond du récipient. En d'autres termes, une contrainte avant et pendant le chauffage réside dans le fait que la sauce, ou jus, et le féculent ne doivent pas se toucher. Ainsi, la sauce doit être séparée et ne pas rentrer en contact avec le produit alimentaire situé sur le dessus (le féculent, par exemple).

Ceci n'empêche pas cependant de remplir le récipient avec la viande, puis le féculent et enfin le jus. Ou alors, dans une alternative, de remplir le récipient avec la viande, puis le jus, et enfin le féculent.

Le chauffage n'est alors mis en oeuvre que lorsque le jus a coulé par gravité dans le fond du récipient et n'est plus en contact avec le féculent situé sur le dessus (le jus peut alors être situé en dessous du produit alimentaire intermédiaire ou en partie mêlé à ce dernier).

On scelle ensuite hermétiquement sous vide le récipient rempli et on soumet le récipient à un traitement thermique à une température et pendant un temps suffisant pour cuire à la vapeur le féculent (qui se trouve donc en partie supérieure du récipient). La cuisson humide du féculent par le biais de la vapeur émise par la sauce ou le jus permet de ne pas dénaturer le féculent.

Contrairement à la pratique habituelle qui consiste à agiter le récipient lors du traitement thermique de façon à optimiser un tel traitement, le procédé de l'invention prévoit que le récipient soit statique durant le traitement thermique.

Par conséquent, les constituants disposés en couches successives ne sont pas mélangés et la présentation du plat cuisiné est satisfaisante au final, ressemblant à celle de la cuisine traditionnelle.

Les qualités organoleptiques, notamment de goût et d'aspect, des constituants (et notamment des féculents situés sur le dessus) ne sont pas ou peu altérées lors de la préparation.

La solution de l'invention est en outre simple à mettre en oeuvre et relativement peu coûteuse.

Par ailleurs, le procédé de l'invention peut être mis en oeuvre efficacement, de manière industrielle.

Selon un mode de réalisation particulier de l'invention, ladite étape de chauffage assure une stérilisation et/ou une pasteurisation dudit produit.

Selon la température de chauffage mise en oeuvre, on pourra donc stériliser et/ou pasteuriser de façon statique ce produit.

Dans le cas d'une pasteurisation d'un produit alimentaire (ce dernier garnissant une barquette ou un bol micro-ondable), le produit peut être porté à une température supérieure à 75°C, notamment comprise entre 80°C et 100° C, pendant un temps donné, par exemple de l'ordre de 3 à 5 min, de manière à lui assurer une date limite de consommation de 20 jours après ce traitement thermique, par exemple.

En effectuant une stérilisation d'un produit alimentaire (ce dernier étant disposé dans une boîte de conserve), on peut repousser cette date limite de consommation à un délai bien supérieur, par exemple de l'ordre d'un an. Ceci est possible en portant le produit à une température plus élevée, par exemple de l'ordre de 120° C à 125°C, pendant une durée de l'ordre de 3 à 5 min par exemple.

Selon un aspect particulier de l'invention, ledit premier produit alimentaire est constitué d'une viande, d'un poisson ou de légumes.
Selon un aspect particulier de l'invention, ledit premier produit alimentaire est pré-cuit avant conditionnement dans ledit récipient.

Selon un aspect particulier de l'invention, ledit second produit alimentaire est constitué d'un féculent, d'un poisson ou de légumes fragiles.

Selon un aspect particulier de l'invention, ledit second produit alimentaire est pré-cuit avant conditionnement dans ledit récipient.

Selon un aspect particulier de l'invention, ladite étape de chauffage assure une stérilisation ou une pasteurisation desdits produits alimentaires.

Selon un aspect particulier de l'invention, ledit récipient est une barquette, un bol ou une timbale recouverte d'un film scellé, ou une boîte de conserve.

Selon un aspect particulier de l'invention, la sauce ou le jus est introduit(e) dans le récipient avant l'introduction dudit premier produit alimentaire, ou bien avant ou après l'introduction dudit second produit alimentaire.

L'invention concerne encore un plat cuisiné préparé et conditionné selon le procédé décrit ci-dessus.

Un tel plat cuisiné est prêt à réchauffer pour être, notamment, consommé à chaud. Les produits alimentaires d'un tel plat peuvent être réchauffé dans une poêle, au four, ou par micro ondes.

Un tel plat cuisiné peut être conditionné dans une barquette ou un bol recouvert(e) d'un film (ou opercule) scellé, ou bien dans une boite de conserve métallique qui est fermée hermétiquement par un couvercle serti sur la boite.

### 5. Liste des figures

D'autres caractéristiques et avantages de l'invention apparaîtront plus clairement à la lecture de la description suivante d'un exemple de mode de mise en oeuvre, donné à titre de simple exemple illustratif et non limitatif, et des dessins annexés, parmi lesquels :
- la figure 1 est une vue en coupe, schématique, d'un exemple de récipient alimentaire montrant la disposition particulière des constituants alimentaires selon le procédé de l'invention ;
- la figure 2 illustre les principales étapes du procédé selon un mode de réalisation de l'invention.

### 6. Description d'un mode de réalisation possible mise en oeuvre de l'invention

### 6.1 Remplissage du récipient

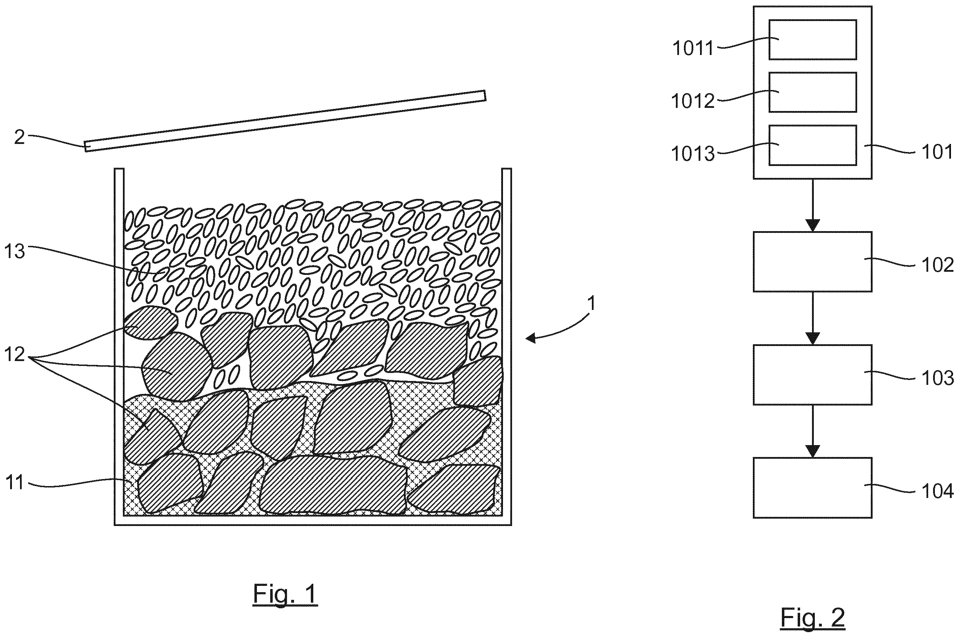

Comme illustré sur les figures 1 et 2, le procédé de préparation et de conditionnement d'un plat cuisiné conforme à l'invention consiste à remplir par couches ou strates successives (étape 101) un récipient 1 mono-compartiment qui est, dans cet exemple, une boîte de conserve métallique.

Ainsi, le procédé comprend :
- la mise en place d'une sauce 11 épaisse ou d'un jus dans le fond (en bas) du récipient 1 (étape 1011) ;
- la mise en place d'une garniture 12, telle une viande, un poisson, et/ou des légumes, qui peut être crue ou pré-cuite (étape 1012) ;
- une fois la garniture 12 mise en place, la mise en place d'un féculent 13, tel que du riz, des pâtes ou des légumes secs, qui est éventuellement pré-cuit (étape 1013).

Le féculent 13 peut être emboîté en dernier et constitue donc l'élément supérieur qui est destiné à être cuit à la vapeur. Le féculent peut être remplacé par un autre composant alimentaire, tel que du poisson ou certains légumes fragiles, qu'on souhaiterait cuire à la vapeur.

On note que la sauce 11 peut être ajoutée à la fin (c'est-à-dire une fois la garniture 12 puis le féculent 13 mis en place dans le récipient 1) et s'écouler par gravité vers le fond du récipient 1. Dans une alternative, la sauce peut être ajoutée après la garniture 12, mais avant le féculent 13, et s'écouler par gravité vers le fond du récipient 1.

On note que le niveau de sauce 11 ne doit pas toucher le féculent 13 lors du traitement thermique, la garniture 12 constituant une couche intermédiaire entre la sauce 11 et le féculent 13. La sauce 11 peut être au moins en partie mêlée à la garniture 12, comme illustré sur la figure 1.

### 6.2 Fermeture du récipient

Une fois les aliments disposés dans le récipient, le récipient 1 est fermé (étape 102) de façon étanche sous vide (c'est-à-dire sous une dépression forte), la valeur du vide étant comprise entre -500 et -900 mbar. De façon classique, un couvercle 2 métallique est fixé sur le récipient 1 par sertissage.

### 6.3 Traitement thermique du récipient

Le récipient 1 est traité en autoclave pour procéder à la cuisson (étape 103) et éventuellement stériliser le contenu (c'est-à-dire les produits alimentaires 11, 12, 13). Il est important que l'orientation du récipient 1 soit conservée pendant le traitement thermique (étape 103) de façon à maintenir la superposition des produits alimentaires 11, 12, 13.

La cuisson provoque une montée en pression à l'intérieur du récipient 1 en particulier à cause de l'évaporation de l'eau provenant des produits alimentaires 11, 12, 13, due à l'augmentation de la température

La sauce 11, située en partie inférieure du récipient 1 et qui ne se mélange pas au féculent 13 (car le récipient 1 est immobile), génère de la vapeur qui permet la cuisson du féculent 13, situé en partie supérieure du récipient 1, sans l'imbiber de liquide.

Un tel traitement thermique des produits alimentaires disposés dans le récipient 1 fermé évite ainsi que des substances volatiles s'échappent du récipient 1, ce qui pourrait nuire à la saveur finale du plat cuisiné. Il permet en outre un chauffage homogène des produits alimentaires 11, 12, 13, et une conservation optimale des qualités organoleptiques des constituants.

De préférence, l'étape 103 de cuisson est suivie d'une étape de refroidissement 104 du récipient 1.

Le produit final (le plat cuisiné) est ainsi composé d'une sauce 11, d'une garniture 12 et de féculents 13 cuits et superposés dans le récipient 1.

Le chauffage ou traitement thermique du produit sert en particulier à favoriser sa conservation. Il peut s'agir d'une pasteurisation, (dans le cas où les ingrédients alimentaires sont disposés dans un bol ou une barquette micro-ondable) ou bien d'une stérilisation (dans le cas où les ingrédients sont placés dans une boite de conserve). Dans le cas d'une stérilisation, le produit final se conserve à température ambiante.

### 6.4 Autres aspects et variantes

Ainsi, la combinaison d'un assemblage par strates des produits alimentaires 11, 12, 13 dans le récipient 1 mono-compartiment, une fermeture sous vide du récipient 1 garni des produits alimentaires superposés et une cuisson/stérilisation immobile des produits alimentaires dans le récipient 1 scellé hermétiquement permet d'obtenir l'objectif recherché (à savoir obtenir une qualité organoleptique satisfaisante des féculents 13) par une cuisson vapeur des féculents 13 dans le récipient 1.

La sauce 11 (ou jus), qui n'est pas en contact avec le féculent 13 lors du traitement thermique, se vaporise et cuit le féculent (pâtes ou riz) 13, ce dernier n'étant ainsi pas dénaturé par la stérilisation humide.

Le procédé de l'invention est particulièrement adapté aux plats cuisinés en conserve, ou bien en barquettes ou bols micro-ondables obturés par un film souple, qui est thermoscellé sur la barquette ou le bol.

Une fois le récipient ouvert, le consommateur peut mélanger les composants du plat avant ou après le réchauffage, et réchauffer au four à micro ondes ou au four traditionnel pour consommer.

L'invention peut être appliquée à des plats cuisinés comprenant d'autres produits alimentaires que des féculents tels que notamment les légumes fragiles, ou les poissons.

La durée et le cycle de températures du traitement thermique varient en fonction du produit à traiter et du type de traitement visé (pasteurisation, stérilisation).

Un tel traitement thermique peut aussi être effectué au moyen d'un champ de micro-ondes généré par un générateur de micro-ondes situé à l'extérieur du récipient 1, ou par induction (pour les boites de conserve métalliques)

Ainsi, le procédé de préparation et de conditionnement d'un plat préparé selon l'invention est simple et peu coûteux à mettre en oeuvre, et peut être utilisé industriellement.

Il évite la dégradation du produit alimentaire, notamment de ses propriétés organoleptiques (tenue, texture, saveur), le plat cuisiné présentant au final un aspect satisfaisant et attractif pour le consommateur, ressemblant à celui de la cuisine traditionnelle.

Le récipient peut être une boite de conserve métallique ou un emballage souple, tel une barquette en carton semi-rigide ou en matière plastique semi-rigide.

Le récipient peut présenter une forme sensiblement rectangulaire ou circulaire par exemple.

## Revendications

1. Procédé de préparation et de conditionnement d'un plat cuisiné, **caractérisé en ce qu'**il comprend les étapes suivantes :
- mise en place (1012) d'un premier produit alimentaire (12) dans un récipient (1) ;
- mise en place (1013) d'un second produit alimentaire (13) dans ledit récipient (1) de sorte que le second produit alimentaire (13) soit situé au-dessus dudit premier produit alimentaire (12) ;
- mise en place (1011) d'une sauce ou d'un jus (11) dans ledit récipient (1), de sorte que ladite sauce ou ledit jus (11) soit situé(e) au-dessous dudit premier produit alimentaire (12) ou mêlé audit premier produit alimentaire (12), sans être en contact avec ledit second produit alimentaire (13), avant et pendant le chauffage (23) ;
- fermeture hermétique (102) sous vide dudit récipient (1) ;
- chauffage (103) du contenu alimentaire dudit récipient (1) fermé, ledit récipient (1) demeurant statique lors de ladite étape de chauffage.

2. Procédé selon la revendication 1, **caractérisé en ce que** ledit premier produit alimentaire (12) est constitué d'une viande, d'un poisson ou de légumes.

3. Procédé selon la revendication 1 ou 2, **caractérisé en ce que** ledit premier produit alimentaire (12) est pré-cuit avant conditionnement dans ledit récipient (1).

4. Procédé selon l'une des revendications 1 à 3, **caractérisé en ce que** ledit second produit alimentaire est constitué d'un féculent, d'un poisson ou de légumes fragiles.

5. Procédé selon l'une quelconque des revendications 1 à 4, **caractérisé en ce que** ledit second produit alimentaire (13) est pré-cuit avant conditionnement dans ledit récipient (1).

6. Procédé selon l'une quelconque des revendications 1 à 5, **caractérisé en ce que** ladite étape de chauffage (103) assure une stérilisation ou une pasteurisation desdits produits alimentaires.

7. Procédé selon l'une quelconque des revendications 1 à 6, **caractérisé en ce que** ledit récipient (1) est une barquette, un bol ou une timbale, recouverte d'un film scellé, ou une boîte de conserve.

8. Procédé selon l'une quelconque des revendications 1 à 7, **caractérisé en ce que** la sauce ou le jus (11) est introduit(e) dans le récipient (1) avant l'introduction dudit premier produit alimentaire (12), ou bien avant ou après l'introduction dudit second produit alimentaire (13).

9. Plat cuisiné obtenu selon le procédé de préparation et de conditionnement de l'une quelconque des revendications 1 à 8.

## Patentansprüche

1. Verfahren zur Zubereitung und Verpackung eines Fertiggerichts, **dadurch gekennzeichnet, dass** es die folgenden Schritte umfasst:
- Anordnen (1012) eines ersten Nahrungsmittels (12) in einem Behälter (1);
- Anordnen (1013) eines zweiten Nahrungsmittels (13) derart in dem Behälter (1), so dass sich das zweite Nahrungsmittel (13) über dem ersten Nahrungsmittel (12) befindet;
- Anordnen (1011) einer Sauce oder eines Safts (11) derart in dem Behälter (1), dass sich die Sauce oder der Saft (11) unter dem ersten Nahrungsmittel (12) befindet oder mit dem ersten Nahrungsmittel (12) vermischt wird, ohne mit dem zweiten Nahrungsmittel (13) vor und während der Erhitzung (23) in Kontakt zu sein;
- hermetischer Verschluss (102) des Behälters (1) unter Vakuum;
- Erhitzen (103) des Nahrungsmittelinhalts des geschlossenen Behälters (1), wobei der Behälter (1) während des Erhitzungsschrittes statisch bleibt.

2. Verfahren nach Anspruch 1, **dadurch gekennzeichnet, dass** das erste Nahrungsmittel (12) aus Fleisch, Fisch oder Gemüse besteht.

3. Verfahren nach Anspruch 1 oder 2, **dadurch gekennzeichnet, dass** das erste Nahrungsmittel (12) vor der Verpackung in den Behälter (1) vorgekocht wird.

4. Verfahren nach einem der Ansprüche 1 bis 3, **dadurch gekennzeichnet, dass** das zweite Nahrungsmittel aus Speisestärke, Fisch oder empfindlichen Gemüsesorten besteht.

5. Verfahren nach einem der Ansprüche 1 bis 4, **dadurch gekennzeichnet, dass** das zweite Nahrungsmittel (13) vor der Verpackung in den Behälter (1) vorgekocht wird.

6. Verfahren nach einem der Ansprüche 1 bis 5, **dadurch gekennzeichnet, dass** der Erhitzungsschritt (103) ein Sterilisieren oder Pasteurisieren der Nahrungsmittel gewährleistet.

7. Verfahren nach einem der Ansprüche 1 bis 6, **dadurch gekennzeichnet, dass** der Behälter (1) eine Schale, eine Schüssel oder ein Becher, die mit einer Siegelfolie überzogen sind, oder eine Konservendose ist.

8. Verfahren nach einem der Ansprüche 1 bis 7, **dadurch gekennzeichnet, dass** die Sauce oder der Saft (11) in den Behälter (1) vor der Einführung des ersten Nahrungsmittels (12) oder auch vor oder nach der Einführung des zweiten Nahrungsmittels (13) eingeführt wird.

9. Fertiggericht, das nach dem Zubereitungs- und Verpackungsverfahren nach einem der Ansprüche 1 bis 8 erhalten wird.

## Claims

1. Method for preparing and packaging a ready-made dish, **characterized in that** it comprises the following steps:
- placing (1012) a first food item (12) in a container (1);
- placing (1013) a second food item (13) in said container (1) in such a way that the second food item (13) is situated above said first food item (12);
- placing (1011) a sauce or a gravy (11) in said container (1) so that said sauce or said gravy (11) is situated beneath said first food item (12) or is mixed with said first food item (12) without being in contact with said second food item (13) before and during the heating (23) ;
- carrying out the hermetic vacuum sealing (102) of said container (1);
- heating (103) the food contents of said closed container (1), said container (1) remaining without movement during the heating step.

2. Method according to claim 1, **characterized in that** said first food item (12) is constituted by meat, fish or vegetables.

3. Method according to claim 1 or 2, **characterized in that** said first food item (12) is pre-cooked before being packaged in said container (1).

4. Method according to one of the claims 1 to 3, **characterized in that** said second food item is constituted by a starch food, fish or delicate vegetables.

5. Method according to any one of the claims 1 to 4, **characterized in that** said second food item (13) is pre-cooked before being packaged in said container (1).

6. Method according to any one of the claims 1 to 5, **characterized in that** said heating step (103) carries out a sterilization and/or a pasteurization of said food items.

7. Method according to any one of the claims 1 to 6, **characterized in that** said container (1) is a tray, bowl or cylinder covered with a sealed film, or a can

8. Method according to any one of the claims 1 to 7, **characterized in that** said sauce or the gravy (11) is introduced into the container (1) before the introduction of said first food item (12), or else before or after the introduction of said second food item (13).

9. Ready-made dish obtained according to the method for preparing and packaging according to any one of the claims 1 to 8.
